# EUROPÄISCHE PATENTSCHRIFT

(11) **EP 3 488 676 B1**
(45) Veröffentlichungstag und Bekanntmachung des Hinweises auf die Patenterteilung: **27.05.2020**
(21) Anmeldenummer: 18208499.6
(22) Anmeldetag: 27.11.2018
(51) Int. Cl.: A01B 33/08, A01D 78/10, A01B 71/06

(54) **GETRIEBE FÜR EIN LANDWIRTSCHAFTLICHES ANBAUGERÄT**
TRANSMISSION FOR AN AGRICULTURAL IMPLEMENT
ENGRENAGE POUR UN APPAREIL RAPPORTÉ AGRICOLE

(30) Priorität: 28.11.2017 IT 201700136398
(43) Veröffentlichungstag der Anmeldung: 29.05.2019
(73) Patentinhaber: Seppi M. spa-AG, 39052 Caldaro (IT)
(72) Erfinder: SEPPI, Lorenz, 39052 Caldaro (IT)
(74) Vertreter: Ausserer, Anton

(56) Entgegenhaltungen:
- EP-A1- 2 923 541
- CN-A- 106 612 641
- DE-U1-202007 015 176
- FR-A- 1 337 291

## Beschreibung

Die vorliegende Erfindung bezieht sich auf ein Getriebe für ein landwirtschaftliches Anbaugerät zum Anbau an einer Zugmaschine oder ähnlichem und angetrieben durch die Zugmaschine.

Aus der EP 2 923 541 ist ein landwirtschaftliches Anbaugerät zum Anbau an einen Schlepper bekannt, mit Arbeitsaggregaten, die mittels eines mechanischen Antriebstrangs von einer Schlepperzapfwelle her antreibbar sind. Der mechanische Antriebsstrang umfasst ein Verteilergetriebe mit mindestens zwei zu verschiedenen Seiten gehenden Ausgangswellen, an die Gelenkwellen zum Antreiben von mindestens zwei Arbeitsaggregaten anschließbar sind. Ein Anbaugerät dieser Art kann insbesondere ein Mähwerk oder auch eine Heuwendemaschine zur Bearbeitung von Heu in der Form eines Schwadens oder ein Zetter sein. Die Ausgangswellen des Verteilergetriebes fluchten nicht zueinander und die Gelenkwellen sind zueinander verschränkt an der Ausgangswelle anschließbar.

Die vorliegende Erfindung stellt sich die Aufgabe ein zwei- bzw. mehrstufiges Getriebe für eine zu verbindende Maschine vorzuschlagen, das kompakter, einfach und stabiler ist und überdies ermöglicht, dass die Eingangswelle und die Ausgangswelle in derselben Ebene liegen.

Gemäß der Erfindung wird diese Aufgabe durch ein Getriebe für ein landwirtschaftliches Anbaugerät gemäß Patentanspruch 1 gelöst.

Das anschließbare Getriebe für landwirtschaftliche Anbaugeräte, insbesondere ein Mähwerk oder Mulchgerät, umfasst eine Eingangswelle, die durch eine landwirtschaftliche Maschine, wie zum Beispiel einen Schlepper antreibbar ist. Diese Eingangswelle treibt ein Ritzel an, das über eine hypoide oder konische Zahnung einen Zahnkranz antreibt. Dieser Zahnkranz ist an einer Zwischenwelle befestigt. Auf dieser Zwischenwelle sind zwei Zahnräder mit verschiedener Abmessungen angeordnet. Mittels einer Reibkupplung oder Kupplung kann das größere Zahnrad der beiden Zahnräder mit der Zwischenwelle verbunden werden. Die beiden Zahnräder sind immer jeweils mit einem Zahnrad an einer Ausgangswelle gekoppelt, wobei bei der Verbindung Zahnrad/Zahnrad ohne Reibkupplung oder Kupplung mindestens eines der mit der jeweiligen Welle verbundenen Zahnräder, an der es befestigt ist, ein Freilaufrad ist, wobei die Ausgangswelle in derselben Ebene angeordnet ist, wie die Eingangswelle. Die Ausgangswelle kann zum Beispiel ein oder zwei Mähwerke bzw. Geräte antreiben.

Vorteilhafter Weise ist zwischen der Verbindung Ritzel/Eingangswelle und/oder Zahnrad, an der Ausgangswelle gekoppelt ein Zahnrad mit Reibkupplung über eine Freilaufkupplung angeordnet. Dadurch werden während der Abstellung des Motors oder der Zugmaschine oder ähnlichem Beschädigungen vermieden.

Die Getriebeanordnung kann vorteilhafter Weise gemäß der Erfindung in mehreren anschließbaren landwirtschaftlichen Geräten verwendet werden, besonders vorteilhaft jedoch Fräsen, Brecher oder Mulchgeräte.

Weitere Merkmale und Details der Erfindung gehen aus den Patentansprüchen und aus der folgenden Beschreibung einer bevorzugten, nicht begrenzenden, in den beigefügten Zeichnungen dargestellten Ausführungsform hervor. Es zeigen:
- Figur 1: einen vertikalen Schnitt eines erfindungsgemäßen Getriebes, und
- Figur 2: einen horizontalen Schnitt eines erfindungsgemäßen Getriebes.

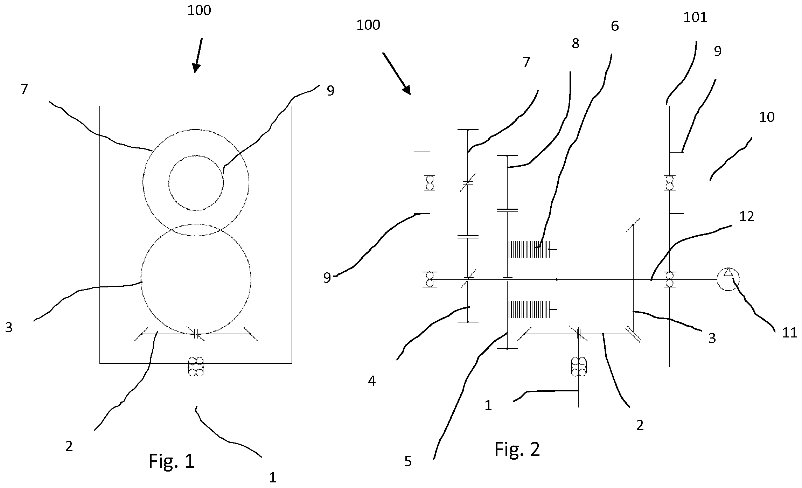

Mit 1 ist in Figur 1 eine Eingangswelle des erfindungsgemäßen Getriebes 100 angegeben. Die Eingangswelle 1 des landwirtschaftlichen Anbaugerätes kann zum Beispiel mit der Zapfwelle einer landwirtschaftlichen Zugmaschine zum Beispiel eines Traktors verbunden, die/der die Eingangswelle 1 antreibt. Die Antriebsmittel der Eingangswelle 1 sind nicht dargestellt. Die Eingangswelle 1 ist mit einem Ritzel 2 verbunden. Vorteilhafter Weise weist die Verbindung zwischen Eingangswelle 1 und Ritzel2 einen Freilauf auf, um eine Kraftübertragung während des Abschaltens des Motors der Zugmaschine oder ähnlichen aufgrund der Trägheit von gewissen mechanischen Organen zu vermeiden. Die Eingangswelle 1 treibt das Ritzel 2 an, das mittels einer konischen und/oder hypoiden Zahnverbindung mit einem Zahnkranz 3 gekoppelt ist.

Der Zahnkranz 3 ist auf einer Zwischenwelle 12 fest angeordnet. Die Zwischenwelle 12 wird durch ein Lager drehbar getragen. Auf der Zwischenwelle 12 sind zwei Zahnräder 4 und 5 verschiedener Abmessungen angeordnet.

Die Zahnräder 4 und 5 sind jeweils mit entsprechenden Zahnrädern 7 und 8 gekoppelt.

Sowohl das Zahnrad 7 als auch das Zahnrad 8 sind auf einer Ausgangswelle 10 angeordnet. Die Ausgangswelle 10 liegt in derselben Ebene wie die Eingangswelle 1.

Über eine Reibkupplung bzw. Kupplung 6 wird das Zahnrad 5, das Rad größerer Abmessung als das Zahnrad 4, mit der Zwischenwelle 12 gekoppelt. Ist das Zahnrad über die Reibkupplung bzw. Kupplung 6 nicht gekoppelt, ist dieses frei laufend. Über die Koppelung des Zahnrades 5 mit der Zwischenwelle 12 überträgt diese die Kraft über das Zahnrad 8 auf die Ausgangswelle 10. Das Zahnrad 7 oder das Zahnrad 4 sind mit der jeweiligen Welle über eine Freilaufverbindung verbunden, was bedeutet, dass sobald das Zahnrad 5 über die Reibkupplung bzw. Kupplung 6 verbunden ist, die Ausgangswelle 10 sich schneller dreht und eine der Verbindungen Zwischenwelle 12/Zahnrad 5 oder Ausgangswelle 10/Zahnrad 7 sich im Freilauf befindet.

Durch dieses Freilaufsystem Reibkupplung/Kupplung Zahnräder und Wellen sind zwei verschiedene Ausganggeschwindigkeiten der Ausgangswelle 10 möglich. Die Ausgangswelle wird durch Lager auf den Seiten drehbar getragen. Die Ausgangswelle 1 ist bevorzugter Weise an ihren Enden mit jeweils einem Kopf eines Mähwerkes oder eines Mulchgerätes verbunden.

Das gesamte Gehäuse 101 des Getriebes wird drehbar auf einem Rahmen (nicht dargestellt) über die Lager 9 getragen.

Diese Ausbildung des Getriebes erlaubt, dass die Zapfwelle gegenüber der Ausgangswelle 10 gedreht werden kann und umgekehrt. Dies ist besonders vorteilhaft bei nicht ebenen Bodenbearbeitungen.

Eine hydraulische Pumpe 11 kann zur Steuerung der Reibkupplung bzw. Kupplung 6 vorgesehen sein

Als bevorzugte Ausführungsform ergibt sich eine Ausbildung, in der der Zahnkranz 3 auf einer Seite der Drehachse des Ritzels 2 im Rahmen 101 Getriebes angeordnet ist und die Zahnräder 4 und 5 und die Reibkupplung/Kupplung auf der anderen Seite der Drehachse des Ritzels 2 angeordnet sind. Auf diese Art und Weise kann die Reibkupplung/Kupplung 6 in einem Raum angeordnet werden, der zwischen dem Zahnkranz 3 und dem Ritzel 2 im Rahmen 101 des Getriebes 100 gebildet ist. Auf diese Weise ist das gesamte Getriebe 100 kompakter mit sich ergebenden Vorteilen .

Es ist schließlich klar, dass an dem bis jetzt beschriebenen Getriebe 100 für den Fachmann naheliegende Zusätze, Änderungen oder Varianten vorgenommen werden können ohne den von den beigefügten Patentansprüchen festgelegten Schutzbereich zu verlassen.

### Legende der Bezugsziffern

- 1: Eingangswelle
- 2: Ritzel
- 3: Zahnkranz
- 4,5,7,8: Zahnrad
- 6: Reibkupplung/Kupplung
- 9: Lager
- 10: Ausgangswelle
- 11: Pumpe
- 12: Zwischenwelle
- 100: Getriebe
- 101: Rahmen

## Patentansprüche

1. Zwei- bzw. mehrstufiges Getriebe für ein landwirtschaftliches Anbaugerät zum Anbau an einer Zugmaschine, einem Schlepper oder ähnlichem, das über die Welle oder Zapfwelle der Zugmaschine, Schlepper oder ähnlichem angetrieben wird, umfassend eine Eingangswelle (1), die von der Zugmaschine, Schlepper oder ähnlichen angetrieben wird, wobei an der Eingangswelle (1) eintretend in ein Gehäuse (101) ein Ritzel (2) angeordnet ist, wobei das Ritzel (2) von der Eingangswelle (1) angetrieben wird und über eine hypoide und/oder konische Zahnkoppelung einen an einer Zwischenwelle (12) befestigten Zahnkranz (3) antreibt, wobei die Zwischenwelle im Wesentlichen senkrecht zur Eingangswelle (1) angeordnet ist, **dadurch gekennzeichnet, dass** auf der Zwischenwelle (12) zwei Zahnräder (4, 5) mit verschiedenen Abmessungen angeordnet sind, und wobei mittels einer Reibkupplung bzw. Kupplung (6) eines der beiden Zahnräder (5) mit der Zwischenwelle (12) verbunden werden kann, wobei die Zahnräder (4,5) der Zwischenwelle jeweils mit einem an einer Ausgangswelle (10) angeordneten Zahnrad (7,8) gekoppelt sind, und wobei in der Verbindung Zahnrad (4) der Zwischenwelle/Zahnrad (7) der Ausgangswelle (10) ohne Reibkupplung/Kupplung (6) mindestens eines der Zahnräder (4, 7) eine Freilaufverbindung mit der jeweiligen Welle (10, 12) aufweist, auf der es befestigt ist, und wobei die Ausgangswelle (10) in derselben Ebene der Eingangswelle angeordnet und das die Ausgangswelle (10) an mindestens einem Ende dieser außerhalb des Gehäuses (101) des Getriebes mit jeweils einem Antrieb einer Fräse, eines Brechers oder eines Mulchgerätes oder ähnlichem verbindbar ist.

2. Zweistufiges Getriebe (100) für ein landwirtschaftliches Anbaugerät nach Anspruch 1,
**dadurch gekennzeichnet, dass** das mit der Zwischenwelle (12) kuppelbare Zahnrad (5) das Rad mit der größeren Abmessungen der beiden auf der Zwischenwelle (12) angeordneten Zahnräder ist.

3. Zweistufiges Getriebe (100) für ein landwirtschaftliches Anbaugerät nach einem der vorangehenden Ansprüche,
**dadurch gekennzeichnet, dass** das Zahnrad (4) mit kleinerer Abmessung der beiden auf der Zwischenwelle (12) angeordneten Zahnräder eine Freilaufverbindung mit der Zwischenwelle (12) aufweist.

4. Zweistufiges Getriebe (100) für ein landwirtschaftliches Anbaugerät nach einem der Ansprüche von 1 bis 2,
**dadurch gekennzeichnet, dass** das Zahnrad (7) der Zwischenwelle (12), das mit dem Zahnrad (4) der Zwischenwelle mit kleinerer Abmessung der beiden auf der Zwischenwelle (12) angeordneten Zahnräder gekoppelt ist, eine Freilaufverbindung mit der Ausgangswelle (10) aufweist.

5. Zweistufiges Getriebe (100) für ein landwirtschaftliches Anbaugerät nach einem der vorangehenden Ansprüche,
**dadurch gekennzeichnet, dass** die Verbindung zwischen Ritzel und Eingangswelle (1) und/oder zwischen dem Zahnrad (8), das mit dem Zahnrad (5) mit größerer Abmessung der beiden auf der Zwischenwelle (12) angeordneten Zahnräder gekoppelt ist, eine Freilaufverbindung mit der Ausgangswelle (10) aufweist.

6. Zweistufiges Getriebe (100) für ein landwirtschaftliches Anbaugerät nach einem der vorangehenden Ansprüche,
**dadurch gekennzeichnet, dass** das Gehäuse (101) des Getriebes drehbar von zwei Lagern (9) getragen wird.

7. Zweistufiges Getriebe (100) für ein landwirtschaftliches Anbaugerät nach einem der vorangehenden Ansprüche,
**dadurch gekennzeichnet, dass** auf einer Seite der Drehachse des Ritzels (2) im Rahmen (101) der Zahnkranz (3) und auf der anderen Seite der Drehachse des Ritzels (2) im Rahmen (101) die Zahnräder (4,5) und die Reibkupplung/Kupplung (6) angeordnet sind und die Reibkupplung/Kupplung (6) im Raum angeordnet ist, der zwischen dem Ritzel (2) und dem Zahnkranz (3) gebildet ist.

## Claims

1. A two or more speed transmission (100) for an agricultural towed apparatus attached to a towing machine, a tractor or the like, which is driven by the shaft or PTO of the towing machine, the tractor or the like, comprising an input shaft (1) which is driven by the towing machine, the tractor or the like, in which a pinion (2) is arranged on the input shaft (1) entering a housing (101) of the transmission, said pinion being driven by the input shaft (1) and actuating a ring gear (3) fixed to an intermediate shaft (12) via a hypoid and/or conical gear set, the intermediate shaft being oriented substantially orthogonal to the input shaft (1), **characterized in that** two gear wheels (4, 5) having different sizes are arranged on the intermediate shaft (12), wherein a clutch or a joint (6) may be used to connect one of the two gear wheels (5) with the intermediate shaft (12), the gear wheels (4, 5) of the intermediate shaft being coupled to a gear wheel (7, 8) arranged on an output shaft (10) and wherein, in the connection of the gear wheel (4) of the intermediate shaft with the gear wheel (7) of the output shaft (10) without clutch/joint (6) at least one of the gear wheels (4, 7) has an idle connection with its shaft (10, 12) on which it is fixed, and wherein the output shaft (10) is arranged in the same plane as the input shaft and that the output shaft (10) is adapted to be connected, at one end outside the housing (101) of the transmission, with a mulching, crushing or cutter head, or the like.

2. A two or more speed transmission (100) for an agricultural towed apparatus as claimed in claim 1, **characterized in that** the gear wheel (5) adapted to be coupled to the intermediate shaft (12), is the wheel with the larger size of the two gear wheels arranged on the intermediate shaft (12).

3. A two or more speed transmission (100) for an agricultural towed apparatus as claimed in one of the preceding claims, **characterized in that** the gear wheel (4) with the smaller size of the two gear wheels arranged on the intermediate shaft (12) has an idle connection with the intermediate shaft (12).

4. A two or more speed transmission (100) for an agricultural towed apparatus as claimed in one of claims 1 to 2, **characterized in that** the gear wheel (7) of the output shaft (12) coupled to the gear wheel (4) of the intermediate shaft that is the smaller of the two gear wheels arranged on the intermediate shaft (12) has an idle connection with the output shaft (10).

5. A two or more speed transmission (100) for an agricultural towed apparatus as claimed in one of the preceding claims, **characterized in that** the connection between the pinion (2) and the input shaft (1) and/or the connection between the gear wheel (8) coupled to the larger gear wheel (5) of the two gear wheels arranged on the intermediate shaft (12) has an idle connection with the output shaft (10).

6. A two or more speed transmission (100) for an agricultural towed apparatus as claimed one of the preceding claims, **characterized in that** the housing (101) of the transmission is rotatably supported by two bearings (9).

7. A two or more speed transmission (100) for an agricultural towed apparatus carried as claimed in one of the preceding claims, **characterized in that** the ring gear (3) is arranged on one side of the axis of rotation of the pinion (2) in the frame (101) and the gear wheels (4, 5) and the clutch/joint (6) are arranged on the other side of the axis of rotation of the pinion (2) in the frame (101), and that the clutch/joint (6) is located in the space formed between the pinion (2) and the ring gear (3).

## Revendications

1. Transmission à deux ou plusieurs vitesses (100) pour un appareil agricole porté, fixé à une machine de remorque, un tracteur ou un appareil similaire, entraîné par l'arbre ou la prise de force de la machine de remorque, du tracteur ou de l'appareil similaire, comprenant un arbre d'entrée (1) entraîné par la machine de remorque, le tracteur ou un arbre similaire, dans lequel un pignon (2) est disposé sur l'arbre d'entrée (1) s'insérant dans un carter (101) de la transmission, ledit pignon étant entraîné par l'arbre d'entrée (1) et actionnant une couronne dentée (3) fixée à un arbre intermédiaire (12) par le biais d'une paire d'engrenages hypoïdes et/ou coniques, l'arbre intermédiaire étant agencé sensiblement orthogonal à l'arbre d'entrée (1), **caractérisé en ce que** deux roues dentées (4, 5) de tailles différentes sont disposées sur l'arbre intermédiaire (12), dans laquelle un embrayage ou un joint (6) peut être utilisé pour relier l'une des deux roues dentées (5) à l'arbre intermédiaire (12), les roues dentées (4, 5) de l'arbre intermédiaire étant accouplées à une roue dentée (7, 8) disposés sur un arbre de sortie (10) et dans lequel, dans le raccordement de la roue dentée (4) de l'arbre intermédiaire avec la roue dentée (7) de l'arbre de sortie (10) sans embrayage/joint (6), au moins l'une des roues dentées (4, 7) comporte un accouplement à roue libre avec l'arbre respectif (10, 12) sur lequel il est fixé, et dans lequel l'arbre de sortie (10) se trouve dans le même plan que l'arbre d'entrée et **en ce que** l'arbre de sortie (10) est apte à se relier à une extrémité externe au carter (101) de la transmission, avec une tête de broyage, d'écrasement ou de fraise, ou similaire.

2. Transmission à deux ou plusieurs vitesses (100) pour un appareil agricole porté selon la revendication 1, **caractérisée en ce que** la roue dentée (5) destinée à être accouplée à l'arbre intermédiaire (12) est la roue plus grande des deux roues dentées disposées sur l'arbre intermédiaire (12).

3. Transmission à deux ou plusieurs vitesses (100) pour un appareil agricole porté selon l'une des revendications précédentes, **caractérisée en ce que** la roue dentée (4) plus petite des deux roues d'engrenage disposées sur l'arbre intermédiaire (12) comporte un accouplement à roue libre avec l'arbre intermédiaire (12).

4. Transmission à deux ou plusieurs vitesses (100) pour un appareil agricole porté selon l'une des revendications 1 à 2, **caractérisée en ce que** la roue dentée (7) de l'arbre de sortie (12) accouplée à la roue dentée (4) de l'arbre intermédiaire qui est la plus petite des deux roues dentées disposées sur l'arbre intermédiaire (12) comporte un accouplement à roue libre avec l'arbre de sortie (10).

5. Transmission à deux ou plusieurs vitesses (100) pour un appareil agricole porté selon l'une des revendications précédentes, **caractérisée en ce que** le raccord entre le pignon (2) et l'arbre d'entrée (1) et/ou le raccord entre la roue dentée (8) accouplée à la roue dentée plus grande (5) des deux roues dentées disposées sur l'arbre intermédiaire (12) comporte un accouplement à roue libre avec l'arbre de sortie (10).

6. Transmission à deux ou plusieurs vitesses (100) pour un appareil agricole porté selon l'une des revendications précédentes, **caractérisée en ce que** le carter (101) de la transmission est supporté rotatif par deux paliers (9).

7. Transmission à deux ou plus vitesses (100) pour un appareil agricole porté selon l'une des revendications précédentes, **caractérisé en ce que** la couronne dentée (3) est disposée d'un côté de l'axe de rotation du pignon (2) dans le châssis (101) et les roues dentées (4, 5) et l'embrayage/joint (6) sont disposés de l'autre côté de l'axe de rotation du pignon (2) dans le châssis (101) et **en ce que** l'embrayage/joint (6) se trouve dans l'espace formé entre le pignon (2) et la couronne dentée (3).
